## Europäisches Patentamt
## European Patent Office
## Office européen des brevets

(11) Veröffentlichungsnummer: **0 087 095**
**A1**

# (12) EUROPÄISCHE PATENTANMELDUNG

(21) Anmeldenummer: **83101385.9**

(22) Anmeldetag: **14.02.83**

(51) Int. Cl.³: **C 08 L 25/08**
**C 08 L 55/02**

(30) Priorität: **20.02.82 DE 3206136**

(43) Veröffentlichungstag der Anmeldung:
**31.08.83 Patentblatt 83/35**

(84) Benannte Vertragsstaaten:
**BE DE FR GB NL**

(71) Anmelder: **BASF Aktiengesellschaft**
**Carl-Bosch-Strasse 38**
**D-6700 Ludwigshafen(DE)**

(72) Erfinder: **Hambrecht, Juergen, Dr.**
**Werderstrasse 30**
**D-6900 Heidelberg(DE)**

(72) Erfinder: **Overhoff, Heinz-Juergen, Dr.**
**Max-Slevogt-Strasse 13B**
**D-6710 Frankenthal(DE)**

(72) Erfinder: **Schwaab, Josef, Dr.**
**Rieslingweg 8**
**D-6735 Maikammer(DE)**

(72) Erfinder: **Siebel, Peter, Dr.**
**Trifelsring 20**
**D-6703 Limburgerhof(DE)**

(72) Erfinder: **Brandstetter, Franz, Dr.**
**Ritterbueschel 45**
**D-6730 Neustadt(DE)**

(72) Erfinder: **Echte, Adolf, Dr.**
**Leuschnerstrasse 42**
**D-6700 Ludwigshafen(DE)**

(72) Erfinder: **Priebe, Edmund, Dr.**
**Bensheimer Ring 7A**
**D-6710 Frankenthal(DE)**

(54) **Verfahren zur Herstellung thermoplastischer Formmassen.**

(57) Die Erfindung betrifft ein Verfahren zur Herstellung einer thermoplastichen Formmasse aus 40 bis 90 Gew.% eines Copolymerisates A, aufgebaut aus monovinylaromatischen Monomeren und acrylisch ungesättigten Monomeren, 9,9 bis 60 Gew.% eines Pfropfmischpolymerisates B, aufgebaut aus 50 bis 90 Gew.% einer elastomeren Pfropfgrundlage und 10 bis 50 Gew.% eines monovinylaromatischen Monomeren und 0,1 bis 16 Gew.% eines mit Komponente B partiell verträglichen Schmiermittels, wobei man zunächst die Komponente B und C der Formmasse intensiv miteinander vermischt und die dabei erhaltene homogene Mischung anschließend in eine Schmelze von A einarbeitet.

Die Formmasse kann übliche Zusatzstoffe enthalten und wird zur Herstellung von Formteilen verwendet.

## Verfahren zur Herstellung thermoplastischer Formmassen

Die Erfindung betrifft ein Verfahren zur Herstellung hochschlagzäher thermoplastischer Formmassen auf Basis von mit selektiven Schmiermittel versetzten, kautschukmodifizierten Styrolpolymerisaten. Die Formmassen enthalten ein Copolymerisat, z.B. S/AN als Hartmatrix, und ein Pfropfmischpolymerisat, z.B. SAN gepfropft auf Dien- oder Acrylat-Kautschuke.

Zum Stand der Technik nennen wir:
(1) DE-AS 20 61 216
(2) DE-OS 27 04 679
(3) DE-AS 28 27 594

In (1) und (3) wird beispielsweise die Verbesserung der Kerbschlagzähigkeit und anderer Eigenschaften von ABS-Polymerisaten durch Zusatz von Polysiloxanen und Metallstearaten bzw. organischen Stearinsäurederivaten beschrieben. Die Zugabe der die Zähigkeit verbessernden Hilfsmittel erfolgt i.a. bei der Compoundierung der Styrolcopolymerisate (Hartmatrix). Dies gilt auch für die Zugabe der in (2) beanspruchten Carbonsäureester, die ebenfalls vor allem die Kerbschlagzähigkeit der Styrolcopolymerisate, insbesondere ABS-Polymerisate verbessern. Das durch diese Maßnahme erreichbare mechanische Niveau der Styrolcopolymerisate genügt zumeist den gestellten Ansprüchen, wenngleich die Art und Weise der Zugabe der Hilfsmittel nicht selten zu Produktschwankungen, wegen ungleichmäßiger Einarbeitung der Hilfsstoffe, führt. Für spezielle Anwendungsbereiche insbesondere in der Automobilindustrie bei der Herstellung großer Spritzgußformteile z.B. bei Teilen der Armaturenverkleidung oder bei Front- und Heckspoilern,

Vo/P

reicht das mechanische Niveau, insbesondere die Zähigkeit, häufig nicht aus.

Es bestand deshalb die Aufgabe, schlagzäh modifizierte Styrolcopolymerisate zu schaffen, welche neben den günstigen Eigenschaften der bekannten Formmassen dieser Art, wie Steifigkeit und Festigkeit sowie günstige Verarbeitbarkeit eine selbst höchsten Ansprüchen genügende Zähigkeit bei konstanter Produktqualität aufweisen.

Die Lösung dieser Aufgabe gelingt durch das im Patentanspruch 1 näher bezeichnete Verfahren.

Nachfolgend wird der Aufbau der Komponenten A – D, die als Ausgangskomponenten in dem erfindungsgemäßen Verfahren eingesetzt werden, näher beschrieben.

Komponente A (Hartmatrix)

Die Komponente A liegt in einem Anteil von 90 bis 40 Gew.%, insbesondere von 85 bis 50 Gew.%, bezogen auf A+B+C in der erfindungsgemäßen Formmasse vor. Sie stellt eine Hartkomponente dar, die aus einem oder mehreren Copolymerisaten aus einem oder mehreren Vinylaromaten $a_1$), wie Styrol, $\alpha$-Methylstyrol und kernalkylierten Styrolen mit bis zu 4 Kohlenstoffatomen im Alkylrest und $a_2$) Acrylnitril und/oder (Meth)Acrylsäureestern mit 1 bis 12 Kohlenstoffatomen im Alkylrest, wie Methylmethacrylat, Ethylacrylat, Butylacrylat, Ethylhexylacrylat aufgebaut ist. Der Gehalt an polaren Monomeren $a_2$) in diesen Copolymerisaten der Hartkomponente A soll 5 bis 35 Gew%, insbesondere 10 bis 33 Gew.%, bezogen auf das jeweilige Copolymerisat der Hartkomponente, betragen. Der Gehalt an monovinylaromatischen Monomeren $a_1$) ergibt sich aus 100-$a_2$). Zu dieser Hartkomponente A zählen auch die bei der Pfropfmischpolymerisation zur Herstellung der Komponente B entstehenden freien, nicht gepfropften Vinylaromat-Copolymerisate $b_2$) + $b_3$). Je nach den bei der Pfropfmischpolymerisation für die Herstellung des Pfropfmischpolymerisates B gewählten Bedingungen kann es möglich sein, daß bei der Pfropfmischpolymerisation schon ein hinreichender Anteil an Hartkomponente A gebildet worden ist. Im allgemeinen wird es jedoch nötig sein, die bei der Pfropfmischpolymerisation erhaltenen Produkte mit zusätzlicher, separat hergestellter Hartkomponente (A) abzumischen.

Bei dieser zusätzlichen,separat hergestellten,Hartkomponente A kann es sich um ein Styrol/Acrylnitril-Copolymerisat, ein α-Methylstyrol/Acrylnitril-Copolymerisat, ein α-Methylstyrol/Styrol/Acrylnitril-Terpolymerisat, ein Styrol/Methylmethacrylat-Copolymerisat, ein Styrol/Acrylnitril/Methylmethacrylat-Terpolymerisat handeln. Diese Copolymerisate können einzeln oder auch in Mischung miteinander für die Hartkomponente eingesetzt werden, so daß es sich bei der zusätzlichen, separat hergestellten,Hartkomponente A der erfindungsgemäßen Mischung beispielsweise um eine Mischung aus einem Styrol/Acrylnitril-Copolymerisat und einem α-Methylstyrol/Acrylnitril-Cpolymerisat handeln kann. In dem Fall, in dem die Hartkomponente A der erfindungsgemäßen Massen aus einer Mischung von einem Styrol/Acrylnitril-Copolymerisat und einem α-Methylstyrol/-Acrylnitril-Copolymerisat besteht, soll der Acrylnitril-Gehalt der beiden Copolymerisate tunlichst nicht mehr als 10 Gew.%, vorzugsweise nicht mehr als 5 Gew.%, bezogen auf das Copolymerisat, voneinander abweichen. Die Hartkomponente A der erfindungsgemäßen Massen kann jedoch auch nur aus einem einzigen Styrol/Acrylnitril-Copolymerisat bestehen, nämlich dann, wenn bei den Pfropfmischpolymerisationen zur Herstellung der Komponenten B als auch bei

der Herstellung der zusätzlichen, separat hergestellten, Hartkomponenten von dem gleichen Monomer-Gemisch aus Styrol und Acrylnitril ausgegangen wird.

Die zusätzliche, separat hergestellte, Hartkomponente A kann nach den herkömmlichen Methoden erhalten werden. So kann die Copolymerisation des Styrols und/oder $\alpha$-Methylstyrols mit dem Acrylnitril und/oder (Meth/Acrylsäureester in Masse, Lösung, Suspension oder wäßriger Emulsion durchgeführt werden. Die Hartkomponente A hat vorzugsweise eine Viskositätszahl von 40 bis 100, insbesondere von 50 bis 80. Die Bestimmung der Viskositätszahl erfolgt analog DIN 53 726; dabei werden 0,5 g Material in 100 ml Dimethylformamid gelöst.

Komponente B

Die Komponente B ist ein Pfropfmischpolymerisat, das in einem Anteil von 9,9 bis 60 Gew.%, insbesondere von 15 bis 40 Gew.%, jeweils bezogen auf die Komponenten A+B+C angewendet wird. Dieses Pfropfmischpolymerisat ist aufgebaut aus 10 bis 50 Gew.%, vorzugsweise 15 bis 45 Gew.%, bezogen auf B, eines Gemisches aus mindestens einem vinylaromatischen Monomeren $b_2$), das bis zu 12 Kohlenstoffatome enthält. Es kann bis zu 25 Gew.%, vorzugsweise 0,1 bis 25 Gew.% und insbesondere 5 bis 20 Gew.%, bezogen auf $b_2$), mindestens eines (Meth)acrylsäureesters und/oder von Acrylnitril $b_3$) als Pfropfhülle enthalten. Das Pfropfmischpolymerisat enthält 50 bis 90 Gew.%, insbesondere 60 bis 80 Gew.% einer elastomeren Pfropfgrundlage (Kautschukkomponente) $b_1$).

Die Herstellung der Pfropfmischpolymerisate B ist an sich bekannt. Sie können z.B. hergestellt werden durch Polymerisation eines Gemisches von Styrol und Acrylnitril oder (Meth)acrylaten in Gegenwart eines Kautschuks.

Der Kautschuk $b_1$) soll eine Glastemperatur (nach K.H. Illers und H. Breuer, Kolloid-Zeitschrift 176, (1961), Seite 110) haben, die unter $0^{\circ}C$ liegt. Als Kautschuk kommen beispielsweise in Frage:

Polybutadien (vgl. DE-OS 14 20 775 und DE-OS 14 95 +89). Copolymerisate aus Butadien und Styrol (vgl. britisches Patent 649 166), Copolymerisate aus Butadien und Styrol, Polyacrylester, die gegebenenfalls vernetzt sein können (vgl. DE-AS 11 38 921, DE-AS 12 24 486 oder DE-AS 12 60 135) sowie Copolymerisate aus Acrylsäureester und Butadien (vgl. DE-AS 12 38 207), ferner Elastomer von Copolymerisaten aus Acrylsäureestern mit Styrol, Acrylnitril und Vinylethern und Copolymerisate aus Ethylen und einem nicht konjugierten Dien (EPDM-Kautschuke).

Von den vorstehend genannten Kautschuken (Komponente $b_1$) werden bevorzugt angewendet:

Acrylesterpolymerisate mit einer Glastemperatur $< -40^{\circ}C$, Copolymerisate aus mindestens einem konjugierten Dien und mindestens einem Acrylsäureester mit einer Glastemperatur $< -50^{\circ}C$ und Polymerisate aus mindestens einem konjugierten Dien mit einer Glastemperatur $< -70^{\circ}C$.

Die vinylaromatischen Pfropfmonomeren $b_2$) sind Styrol, $\alpha$-Methylstyrol und/oder kernalkylierte Styrole mit bis zu 12 C-Atomen; als Monomere $b_3$) kommen (Meth)acrylsäureester von Alkanolen mit bis zu 8 C-Atomen sowie Acrylnitril oder Mischungen davon in Betracht.

Die Pfropfcopolymerisation kann in Lösung, Suspension oder vorzugsweise in Emulsion erfolgen. Die Weichphase des Pfropfmischpolymerisats weist bei der bevorzugten Herstellung des Kautschuks und der Pfropfung in Emulsion einen mittleren Teilchendurchmesser ($d_{50}$-Wert der integralen Masseverteilung von $> 0,08 \mu m$ auf. In der Regel liegt der $d_{50}$-Wert im Bereich von 0,1 bis 0,4 $\mu m$; er kann aber auch höher liegen. Die Schlagzähigkeit der Komponente B der Formmasse ist weitgehend vom Teilchendurchmesser der Weichphase unabhängig. Bei solchen Pfropfcopolymerisationen erfolgt eine zumindest teilweise chemische Verknüpfung der polymerisierenden Monomeren mit dem bereits polymerisierten Kautschuk, wobei die Verknüpfung wahrscheinlich an den im Kautschuk enthaltenen Doppelbindungen erfolgt. Zumindest ein Teil der Monomeren ist also auf den Kautschuk gepfropft. Der Teil der Monomeren, der nicht auf den Kautschuk gepfropft ist, copolymerisiert für sich. Dieses Copolymerisat kann bei den hier in Rede stehenden Gemischen der Komponente A zugerechnet werden. Mann kann den Anteil der gepfropften Monomeren dadurch ermitteln, daß man den Gelgehalt der Pfropfcopolymeren bestimmt:

## Komponente C

Die im Sinne der vorliegenden Erfindung wirksamen, mit der Komponente B partiell verträglichen und damit mischbaren Schmiermittel können sehr unterschiedlich aufgebaut sein.

Die erste Gruppe der mit B partiell verträglichen Schmiermittel sind Carbonsäureester- und/oder -polyester, wie sie aus aliphatischen und/oder aromatischen Carbonsäuren bzw. Polycarbonsäuren und aliphatischen und/oder aromatischen Alkoholen und Polyolen erhalten werden. Insbesondere werden Ester von aliphatischen and/oder aromatischen Mono- oder Dicarbonsäuren mit 2 bis 22 C-Atomen und aliphatischen oder aromatischen Hydroxy-Verbindung mit 1 bis 6 OH-Gruppen angewendet.

Beispiele für geeignete Monocarbonsäuren sind Stearinsäure, Behensäure, Undecansäure, Dodecansäure, Laurinsäure, Palmitinsäure. Geeignete Di- und Polycarbonsäuren sind z.B. Oxalsäure, Malonsäure, Bernsteinsäure, Glutarsäure, Adipinsäure, Pimelinsäure, Korksäure, Azelainsäure, Sebacinsäure, Brassylsäure, Thapsinsäure, Maleinsäure, Fumarsäure, Glutaconsäure, $\alpha$-Hydromuconsäure, ß-Hydromuconsäure, $\alpha$-Butyl-$\alpha$-ethylglutarsäure, $\alpha$-,ß-Diethylbernsteinsäure, Isophthalsäure, Terephthalsäure, Hemimellitsäure und 1,4-Cyclohexandicarbonsäure.

Geeignete aliphatische und aromatische Alkohole mit 1 bis 6 OH-Funktionen sind z.B. Stearylalkohol, Behenylalkohol, Palmitylalkohol, Ethylhexylalkohol, Benzylalkohol, Nonylphenol sowie die polyfunktionellen Alkohole wie Ethylenglykol, 1,3-Propylenglykol, 1,2-Propylenglykol, 1,4-Butylenglykol, 1,3-Butylenglykol, 1,2-Butylenglykol, 1,5-Pentandiol, 1,4-Pentandiol, 1,3-Pentandiol, 1,6-Hexandiol, 1,7-Heptandiol, Glycerin, 1,1,1-Trimethylolpropan, 1,1,1--Trimethylolethan, 1,2,6-Triolhexan, $\alpha$-Methylglucosid, Pentaerythrit und Sorbit. Unter dem Ausdruck "mehrwertige Alkohole" sind außerdem vom Phenol abgeleitete Verbindungen, wie 2,2-(4,4'-Hydroxyphenol)propan, das unter der Bezeichnung "Bisphenol A" bekannt ist, zu verstehen.

Erfindungsgemäß besonders bevorzugt zu verwendende Ester aus dieser Gruppe sind z.B. Stearylstearat, Sorbitstearat, Glycerindi- und tristearat, Pentaerythritstearat, Bisphenol-A-stearat, Azelainsäurebisstearat, Adipinsäurebisethylhexylester, Sebacinsäurebisdodecylester u.a.

Sie können nach bekannten Verfahren, wie sie z.B. in "Houben-Weyl, Methoden der organischen Chemie, Georg Thieme Verlag, Stuttgart, 1952, 4. Aufl. Bd. VIII, S. 516 f" beschrieben werden, hergestellt werden.

Als selektive Schmiermittel sind ebenfalls Polyalkylenpolyetherpolyole, die als Polymerisationsprodukte von Alkylenoxiden oder von Alkylenoxiden mit mehrwertigen Alkoholen mit bis 2 bis 6 Hydroxylgruppen entstehen. Beliebige mehrwertige Alkohole können verwendet werden, z.B. die vorstehend im Zusammenhang mit der Herstellung der Hydroxylgruppen enthaltenden Polyester genannten mehrwertigen Alkohole. Beliebige geeignete Alkylenoxide können verwendet werden, z.B. Ethylenoxid, Propylenoxid, Butylenoxid, Amylenoxid und die Blockmischpolymerisate oder heterischen Blockmischpolymerisate dieser Oxide. Die Polyalkylenpolyetherpolyole können aus anderen Ausgangsmaterialien, wie Tetrahydrofuran und Alkylenoxid-Tetrahydrofuran-Copolymerisaten, Epihalogenhydrinen, wie Epichlorhydrin, sowie Aralkylenoxiden, wie Styroloxid, hergestellt werden. Die Polyalkylenpolyetherpolyole können primäre oder sekundäre Hydroxylgruppen enthalten und sind vorzugsweise Polyether, die aus Alkylenoxiden mit 2 bis 6 C-Atomen hergestellt werden, z.B. Polyethyletherglykole, Polypropylenetherglykole und Polybutylenetherglykole. Die Polyalkylenpolyetherpolyole können nach bekannten Verfahren hergestellt werden, z.B. nach dem Verfahren, das von Wurtz 1859 in Encyclopedia of Chemical Technology, Band 7, Seite 257 bis 262, herausgegeben von Interscience Publishers, Inc. (1951) oder in der US-PS 1 922 459 beschrieben ist. Zu den bevorzugten Polyethern gehören die Additionsprodukte von Alkylenoxiden mit Trimethylolpropan, Glycerin, Pentaerythrit, Saccharose, Sorbit, Propylenglykol und 2,2-(4,4-Hydroxyphenyl)propan und ihre Gemische mit Äquivalentgewichten von 250 bis 5000.

Als weitere Schmiermittel können Kondensationsprodukte von Alkylenoxiden mit Polythioethern, hydroxylgruppenhaltigen Polyestern, Phenolen, Alkanolen, aliphatische und aroma-

0087095

O.Z. 0050/35750

tische Carbonsäuren, Polyhydroxyphosphorverbindungen, Polyacetalen, aliphatischen Thiolen, Amine und Säureamiden oder Mischungen davon eingesetzt werden. Bevorzugt sind hierbei oxethylierte Alkohole und/oder Carbonsäuren und deren Derivate mit 1 bis 18 Ethylenoxygruppierungen.

Als mehrwertige Polythioether, die mit Alkylenoxiden kondensiert werden können, eignen sich beispielsweise das Kondensationsprodukt von Thiodiglykol oder das Produkt der Reaktion von zweiwertigen Alkoholen, wie sie vorstehend für die Herstellung der Hydroxylgruppen enthaltenden Polyester genannt wurden, mit einem beliebigen anderen geeigneten Thioetherglykol.

Der hydroxylgruppenhaltige Polyester kann auch ein Polyesteramid sein, wie es beispielsweise erhalten wird, wenn ein Amin oder ein Aminoalkohol in die Reaktionsteilnehmer für die Herstellung der Polyester einbezogen wird. Polyesteramide können beispielsweise hergestellt werden durch Kondensation eines Aminoalkohols, wie Ethanolamin, mit den obengenanten Polycarbonsäuren, oder sie können unter Verwendung der gleichen Komponenten, die den hydroxylgruppenhaltigen Polyester bilden, denen ein Diamin, wie Äthylendiamin, zugesetzt wird, hergestellt werden.

Zu den geeigneten Polyhydroxyphosphorverbindungen gehören die Verbindungen, die in der US-PS 3 639 542 beschrieben werden. Bevorzugte Polyhydroxyphosphorverbindungen werden aus Alkyenoxiden und Säuren des Phosphors mit einer $P_2O_5$-Äquivalenz von etwa 72 bis 95 % hergestellt.

Als Polyacetale, die mit Alkylenoxiden kondensiert werden können, eignen sich die Produkte der Reaktion von Formaldehyd und anderen geeigneten Aldehyden mit zweiwertigen Alkoholen oder Alkylenoxiden, z.B. den obengenannten.

Als aliphatische Thiole, die mit Alkylenoxiden kondensiert werden können, eignen sich beispielsweise Alkanthiole mit wenigstens zwei SE-Gruppen, wie 1,2-Ethanoldithiol, 1,2-Propandithiol, 1,3-Propandithiol und 1,6-Hexandithiol, Alkenthiole, wie 2-Buten-1,4-dithiol und Alkinthiole, wie 3-Hexin-1,6-dithiol.

Als Amine, die mit Alkylenoxiden kondensiert werden können, eignen sich beispielsweise aromatische Amine, wie Anilin, o-Chloranilin, p-Aminoanilin, 1,5-Diaminonaphthalin, Methylendianilin, die Kondensationsprodukte von Anilin und Formaldehyd und 2,4-Diaminotoluol, aliphatische Amine, wie Methylamin, Triisopropanolamin, Ethylendiamin, 1,3-Propylendiamin, 1,4-Butylendiamin und 1,3-Butylendiamin.

Zu den geeigneten Phenolen, die mit Alkylenoxid kondensierbar sind, gehören mono- und polyfunktionelle substituierte und unsubstituierte Phenole, wie Phenol, Alkylphenole, Hydrochinon, Resorcin, Phloroglucin, Bisphenol-A u.a.

Typische aliphatische Alkohole, die mit Alkylenoxiden kondensierbar sind, sind $C_8$-$C_{22}$-Alkanole, wie Octadecylalkohol, Behenylalkohol, Ethylhexylalkohol, Glycerin u.a.

Als selektive Schmiermittel ebenfalls wirksam sind dimere und trimere Fettsäuren, deren Ester und Amide sowie andere Carbonsäureamide.

Auch die einfachen Polyalkylenoxide können, sofern sie in der Polymerkomponente B partiell löslich sind, als wirksame Komponente C eingesetzt werden. Beispiele sind Polypropylenoxide mit Molekulargewichten bis 1000, vorzugsweise bis 600 sowie Ethylenoxid-Propylenoxid-Copolymere mit einem Propylenoxid-Gehalt von bis zu 80 Gew.%, vorzugs- weise 60 Gew.% und einem Molekulargewicht (bestimmt über die OH-Zahl) von 2000, vorzugsweise bis zu 1700, geeignet.

Als selektive Schmiermittel können ferner Mineralöle eingesetzt werden. Verwendbar sind naphthenische und paraffinische Mineralöle. Bei den naphthenischen Ölen kann der Aromatenanteil teilweise oder vollständig hydriert sein. Paraffinische Mineralöle können auch synthetische Paraffine enthalten. Auch Polyethylen- und Polypropylenwachse sind einsetzbar. Auch flüssige Polybutene sind geeignet, sofern eine partielle Verträglichkeit mit Komponente B gewährleistet ist. Die genannten Mineralöle sind allgemein als Weißöle technischen oder pharmazeutischen Grades bekannt und auf dem Markt unter verschiedenen Markennamen erhältlich. Sie besitzen ein Siedeintervall von 120-300°C. Vorzugsweise werden Mineralöle mit Siedeintervallen im Bereich von 150-300°C eingesetzt. Die dynamischen Viskositäten liegen im Bereich von 1 bis 50.000 $[mm^2/s]$, vorzugsweise im Bereich von 10 bis 30.000 $[mm^2/s]$.

Auch Polyorganosiloxane können als mit B partiell verträgliche Schmiermittel eingesetzt werden. Solche Polyorganosiloxane sind Alkyl- und/oder Aryl-substituierte Siloxane, wie Polydimethylsiloxan, Polymethylethylsiloxan, Polydiethylsiloxan, Polymethylphenylsiloxan u.a. Die Polyorganosiloxane sollten einen Siedepunkt von mindestens 130°C, vorzugsweise höher als 150°C aufweisen und eine Viskosität von 1 bis 100.000 $[mm^2/s]$, vorzugsweise 5 bis 50.000 $[mm^2/s]$ aufweisen.

Die zähigkeitserhöhenden Schmiermittel C sind in den Formmassen in Mengen von 0,1 bis 16 Gew.%, vorzugsweise von 2 bis 12 %, bezogen auf A+B+C, enthalten.

Die Aufzählung der vorstehenden Schmiermittel stellt eine grobe Vereinfachung dar. Damit ist eine Einschränkung des erfindungsgemäßen Verfahrens nicht beabsichtigt. Prinzipiell wirken alle mit der Komponente B partiell verträglichen Hilfsstoffe zähigkeitsverbessernd.

Komponente D

Die nach dem erfindungsgemäßen Verfahren herstellbaren Formmassen können gegebenenfalls als weitere Komponente D übliche Zusatzstoffe enthalten.

Als solche Zusatzstoffe seien beispielsweise genannt: Füllstoffe, weitere verträgliche Kunststoffe, Antistatika, Antioxidantien, Flammschutzmittel und Formtrennmittel. Die Zusatzstoffe werden in wirksamen Mengen, vorzugsweise in Mengen von 0,1 bis etwa 30 Gew.%, bezogen auf 100 Teile der Formmasse, eingesetzt.

Beschreibung des Verfahrens

Das Mischen des Pfropfmischpolymerisates B mit dem damit partiell verträglichen Schmiermittel C geschieht durch gemeinsames Extrudieren oder Kneten, wobei die Komponente B, falls erforderlich, zuvor aus der bei der Polymerisation erhaltenen Lösung oder wäßrigen Dispersion isoliert werden kann.

Die in wäßriger Dispersion erhaltenen Produkte der Pfropfmischpolymerisation, Komponente B, können auch nur teilweise entwässert werden und als feuchte Krümel mit dem Schmiermittel vermischt werden. Die Trocknung erfolgt dann während des Vermischens mit C und der anschließenden Konfektionierung mit A.

Erfindungswesentlich ist, daß das Vermischen von B und C zu einer homogenen Masse führt und daß diese Masse anschließend in eine Schmelze der Hartphase A eingearbeitet wird.

Im einzelnen wird bei dem erfindungsgemäßen Verfahren so vorgegangen, daß zunächst das feuchte (feucht = Restfeuchte aus Wasser, Monomeren etc. in einer Menge von 1 bis 50 Gew.%, bezogen auf Feststoff) oder getrocknete Pfropfmischpolymerisat B mit dem Schmiermittel vermischt wird. Dies kann auf Mischaggregaten jeglicher Art geschehen, wie in Fluidmischern, Mischtrommeln oder in Mischaggregaten mit mechanischen Mischvorrichtungen, wie Koknetern, Ein- und Doppelwellenextrudern, Planetwalzenextrudern oder Innenknetern. Dies kann mit und ohne Erhitzen oder Anwendung von Druck geschehen. Bei wasser- oder lösungsmittelfeuchten Pfropfmischpolymerisaten wird die Vermischung vorzugsweise unter gleichzeitigem Verdampfen der flüchtigen Bestandteile vorgenommen.

Nach der Homogenisierung des Gemisches aus Pfropfmischpolymerisat B und Schmiermittel C wird dieses mit der Schmelze der Hartkomponente A, die gegebenenfalls auch noch geringe Mengen Restlösungsmittel oder Wasser enthalten kann, vereinigt und durch Mischaggregate, beispielsweise durch intensiv mischende Knetelemente im Extruder homogen vermischt. Dabei soll die Mischstrecke des Gemisches aus B'C und der Schmelze der Hartkomponente im Bereich von 3 bis 25 D (D = Durchmesser des Extruders, nicht Komponente D), vorzugsweise von 6 bis 20 D liegen, wobei die Temperatur oberhalb des Erweichungspunktes der Hartkomponente liegen muß, d.h. im allgemeinen im Temperaturbereich von 150 bis 320°C, vorzugsweise von 180 bis 270°C. Übliche Zusatzstoffe, wie Pigmente, Farbstoffe, Füllstoffe, Gleitmittel, Antistatika, Antioxidantien, Flammschutzmittel, können auch in trockener Form zugemischt werden, zweckmäßi-

gerweise werden sie jedoch zusammen mit B+C in feuchter oder trockener Form zugegeben.

Zweckmäßigerweise wird bei dem erfindungsgemäßen Verfahren, um Kosten und Zeit zu sparen, das Pfropfmischpolymerisat in feuchter Form, also nach dem Fällen aus der Dispersion und nach dem mechanischen Abtrennen der flüssigen Phase, eingesetzt. Dabei müssen die im Pfropfmischpolymerisat und gegebenenfalls auch im Schmiermittel und in dem überwiegend Styrol enthaltenden Copolymerisat vorhandenen flüchtigen Bestandteile während oder nach dem Einmischvorgang aus der erhaltenen Schmelze entfernt werden. Dies erfolgt zweckmäßigerweise durch Verdampfen der flüchtigen Bestandteile.

Dabei werden Entgasungsvorrichtungen, die am Extruder in Förderrichtung nach der Mischzone angebracht sind, verwendet. Es muß darauf geachtet werden, daß durch diese Öffnungen mit dem Dampf kein Feststoff mitgerissen wird. Dies kann beispielsweise durch den Einbau von Entgasungsstopfschnecken in die Extruderöffnungen geschehen, wodurch mitgerissenes Festprodukt in den Hauptextruder zurückbefördert wird. Die Entgasung kann mit Gegendruck, drucklos oder unter Vakuum erfolgen. Es ist zweckmäßig, mehrere Entgasungsstufen hintereinander vorzusehen, wobei in Förderrichtung des Hauptextruders der Gegendruck stufenweise abnehmen soll. Zusammen mit dem Wasser werdem wasserdampfflüchtige Bestandteile entfernt.

Dadurch wird eine zusätzliche Reinigung des überwiegend Styrol enthaltenden Copolymerisates und des Pfropfmischpolymerisates von störenden Verunreinigungen, wie Restmonomeren, Oligomeren, Resten von Lösungsmitteln und Emulgatoren ermöglicht.

Durch das Verdampfen des Wassers wird infolge seiner hohen Verdampfungswärme der Schmelze Energie entzogen. Aus diesem Grund ist es möglich, durch Variation der Wassermenge im Pfropfmischpolymerisat ein für das Mischen der Einsatzstoffe optimales Temperaturprofil über die Länge der Mischvorrichtung einzustellen: je mehr Wasser die Feuchtgüter enthalten, desto mehr Energie muß für die Verdampfung aufgebracht werden, desto mehr Wärme wird also der Schmelze entzogen und desto niedriger liegt das Temperaturniveau der Schmelze.

Die in den Beispielen und Vergleichsversuchen beschriebenen Parameter wurden wie folgt bestimmt:

1. Die mittlere Teilchengröße und die Teilchengrößenverteilung wurde aus der integralen Massenverteilung nach der Methode von W. Scholtan und H. Lange, Kolloid-Z. und Z.-Polymere $\underline{250}$ (1972), Seiten 782-796, mittels einer analytischen Ultrazentrifuge bestimmt. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als $d_{50}$-Wert der integralen Massenverteilung bezeichnet wird, ist dabei als der Teilchendurchmesser definiert.

2. Die Bestimmung der Viskositätszahl des überwiegend Styrol enthaltenden Copolymerisates erfolgt analog DIN 53 726; dabei wurden 0,5 g Material in 100 ml Dimethylformamid gelöst.

3. Der mittlere Teilchendurchmesser ($d_{50}$-Wert) der integralen Masseverteilung des Pfropfmischpolymeriats B wurde durch Auswertung von Elmi-Aufnahmen bestimmt.

4. Die Tg-Werte der Kautschuke wurden nach K.H. Illers und H. Breuer, Kolloid-Zeitschrift, loc.cit. bestimmt.

5. Der Erweichungspunkt nach Vicat wurde nach DIN 53 460/3 bestimmt.

6. Zur Prüfung der Zähigkeit wurden bei $250^{\circ}C$ Prüfkörper gespritzt. Daran wurde die Kerbschlagzähigkeit nach DIN 53 453 bei $23^{\circ}C$ gemessen.

7. Das Fließverhalten und damit die Verarbeitbarkeit wurde anhand des Schmelzindex nach DIN 53 735 beurteilt. Werte für 21,6 kp bei $200^{\circ}C$; Menge in g/10 Minuten.

Es stellte sich nun überraschenderweise heraus, daß Formmassen, die nach dem erfindungsgemäßen Verfahren hergestellt werden, eine wesentlich bessere Zähigkeit aufweisen, als herkömmliche Formmassen, bei denen das mit der Kautschukkomponente partiell verträgliche Schmiermittel nicht in einem gesonderten Verfahrensschritt mit der Komponente B abgemischt wurde. Vorteile für das erfindungsgemäße Verfahren ergeben sich auch in der Verarbeitbarkeit und bezüglich Schwankungen in der Produktqualität.

Für die in den Beispielen und in den Vergleichsversuchen beschriebenen Formmassen wurden die in Tabelle 1 aufgeführten Copolymerisate $A_1-A_3$ und die in Tabelle 2 zusammengestellten Polymischpolymerisate $B_1$ bis $B_4$ verwendet, deren Zusammensetzung und weitere Eigenschaften sind in den genannten Tabellen ebenfalls angegeben.

Tabelle 1

Bestandteil A der thermoplastischen Formmassen

| Bezeich-nung | Typ des Coppoly-merisats | Zusammensetzung in Teilen | | Kerbschlag-zähigkeit $(kJ/m^2)$ | Viskosität-zahl $(ml/g)$ |
|---|---|---|---|---|---|
| | | AN | MMA | | |
| $A_1$ | SAN | 35 | – | 3,2 | 70 |
| $A_2$ | S-AN-MMA | 20 | 10 | 3,4 | 73 |
| $A_3$ | $\alpha$-MS-AN | 30 | – | 4,1 | 57 |

S = Styrol

AN = Acrylnitril

MMA = Methylmethacrylat

$\alpha$-MS = $\alpha$-Methylstyrol

0087095

Tabelle 2

Pfropfmischpolymerisat B

| Bezeich-nung | Zusammensetzung des Kautschuks ($b_1$) (%) | | Zusammensetzung des Pfropfreises (%) | | | Kautschuk/ Pfropfreis (%) | Tg (°C) | $d_{50}$-Wert (nm) |
|---|---|---|---|---|---|---|---|---|
| | Bu | BA | $S(b_2)$ | $AN(b_3)$ | $MMA(b_3)$ | | | |
| $B_1$ | 100 | – | 70 | 30 | – | 60/30 | –83 | 200 |
| $B_2$ | 40 | 60 | 70 | 30 | – | 72/25 | –63 | 150 |
| $B_3$ | – | 100 | 75 | 25 | – | 60/40 | –48 | 100 |
| $B_4$ | – | 100 | 75 | 10 | 15 | 70/30 | –44 | 400 |

S   = Styrol

AN  = Acrylnitril

MMA = Methylmethacrylat

Bu  = Butadien

BA  = n-Butylacrylat

Die Erfindung wird durch die nachfolgenden Beispiele näher erläutert. Die in den Beispielen genannten Teile und Prozente beziehen sich, sofern nicht anderes angegeben, auf das Gewicht.

Beispiele 1 - 7

Zur Durchführung der Beispiele wurden die in der Tabelle 3 aufgeführten Polymerisate $A_n$ und $B_n$ und Schmiermittel C verwendet. Die Aufarbeitung erfolgte in den Schritten: Abmischung des mit einem Restfeuchtegehalt von 35 Gew.%, bezogen auf das Propfmischpolymerisat, versehenen Pfropf- mischpolymerisates $B_n$ mit dem Schmiermittel auf einem Fluidmischer bei Raumtemperatur während 3 Stunden und Eindosierung des Gemisches durch eine Öffnung am Beginn eines Doppelschneckenextruders, wie in der DE-AS 20 37 784 beschrieben.

Durch eine in Förderrichtung sich anschließende Öffnung wurden, entgegen der Schwerkraft, die in der Tabelle 3 genannten Mengen an Schmelze des Styrols enthaltenden Copolymerisates $A_n$ eindosiert, so daß sich die in der Tabelle angegebenen Zusammensetzungen der Formmasse er- gaben. Hinter der Öffnung befindet sich im Extruder die Homogenisierstrecke in Form von intensiv mischenden Knetelementen. Die Massetemperatur lag im Bereich von 230 bis 280°C. Durch drei sich anschließende Entgasungsvorrichtungen wurden die flüchtigen Bestandteile entfernt.

Beispiele 8 - 10

Es wurde, wie in den Beispielen 1 bis 2 beschrieben, verfahren, mit dem Unterschied, daß das feuchte Pfropf- mischpolymerisat $B_n$ und das Schmiermittel nicht <u>vor</u> der

Dosierung in den Doppelschneckenextruder vermischt, sondern nach der Dosierung im Extruder intensiv durchmischt wurden.

Beispiele 11 bis 14

Die in Tabelle 3 aufgeführten Polymerisate $A_n$ und $B_n$ und Schmiermittel C wurden wie folgt aufgearbeitet: Die trockenen Pfropfmischpolymerisate $B_n$ wurden in einem Fluidmischer mit den angegebenen Mengen Schmiermittel während 3 Stunden intensiv vermischt und anschließend auf einem Doppelschneckenextruder in eine Schmelze der Hartkomponente $A_n$ eindosiert und mit dieser intensiv vermischt.

Vergleichsversuche A und B

Die in Tabelle 3 aufgeführten Polymerisate $A_n$, $B_n$ und Schmiermittel wurden gemeinsam auf einen Doppelschneckenextruder gegeben und unter intensiver Mischwirkung konfektioniert. Das Temperaturprofil des Extruders umfaßte den Bereich 240 bis 290$^o$C.

Vergleichsversuch C

Das Schmiermittel C wurde in einem gesonderten Konfektionierschritt dem fertigen Polymerisat, bestehend aus den in Tabelle 3 angegebenen Komponenten $A_n$ und $B_n$ zugesetzt. Die Temperaturen im Extruder betrugen 250 bis 290$^o$C.

Vergleichsversuch D

Ein Gemisch aus Hartkomponente $A_n$ und Schmiermittel C, wie es in einem Massepolymerisationsprozeß anfiel, wurde auf einem Doppelschneckenextruder mit dem Pfropfmischpolymerisat $B_n$ abgemischt. Temperaturbereich 250 bis 270$^o$C.

## Vergleichsversuch E

Die in Tabelle 3 angegebenen Polymerisate $A_n$, $B_n$ und das Schmiermittel C wurden auf einem Doppelschneckenextruder gemeinsam unter intensiver Durchmischung konfektioniert. Das Temperaturprofil des Extruders umfaßte den Bereich 240 bis 290°C.

Tabelle 3

| Beispiele Vergleichs- versuche | Zusammensetzung | | | Kerbschlag- zähigkeit [1] $[kJ/cm^2]$ | Schmelz- index | Vicat $[^oC]$ |
|---|---|---|---|---|---|---|
| | $A_n$ [Gew.%] | $B_n$ [Gew.%] | C [Gew.%] | | | |
| 1 | 54 $A_1$ | 41 $B_1$ | 5 Stearylstearat | 24,5 | 12 | 96 |
| 2 | 67 $A_1$ | 28 $B_2$ | 5 Stearylstearat | 20,9 | 12 | 93 |
| 3 | 55 $A_1$ | 40 $B_3$ | 5 Stearylstearat | 18,9 | 13 | 93 |
| 4 | 55 $A_2$ | 40 $B_4$ | 5 Polypropylenoxid | 27,3 | 10 | 91 |
| 5 | 55 $A_3$ | 40 $B_3$ | 5 trimere Fettsäure | 20,4 | 9 | 105 |
| 6 | 67 $A_1$ | 28 $B_2$ | 5 Sorbitmonostearat | 22,3 | 12 | 92 |
| 7 | 54 $A_1$ | 43 $B_1$ | 5 Mineralöl [2] | 25,8 | 14 | 97 |
| 8 | 55 $A_1$ | 40 $B_3$ | 5 Glycerindistearat | 20,5 | 15 | 92 |
| 9 | 67 $A_1$ | 28 $B_2$ | 5 Stearylstearat | 21,3 | 13 | 94 |
| 10 | 56 $A_1$ | 41 $B_3$ | 3 Pentadecansäurepenta- decylester | 17,4 | 10 | 94 |
| 11 | 52 $A_1$ | 39 $B_3$ | 9 Pentadecansäurepenta- decylester | 24,5 | 13 | 91 |
| 12 | 55 $A_1$ | 40 $B_3$ | 5 10-fach ethoxyliertes Nonylphenol | 16,9 | 15 | 93 |
| 13 | 67 $A_1$ | 28 $B_2$ | 5 Glycerindistearat | 22,3 | 11 | 93 |
| 14 | 54 $A_1$ | 43 $B_1$ | 3 Mineralöl [2] | 19,7 | 14 | 98 |
| nicht erfindungsgemäß | | | | | | |
| A | 55 $A_1$ | 40 $B_3$ | 5 Stearylstearat | 8,9 | 10 | 90 |
| B | 67 $A_1$ | 28 $B_2$ | 5 Stearylstearat | 12,1 | 13 | 91 |
| C | 55 $A_1$ | 40 $B_3$ | 5 Stearylstearat | 7,3 | 12 | 90 |
| D | 55 $A_1$ | 40 $B_3$ | 5 Stearylstearat | 7,8 | 13 | 89 |
| E | 54 $A_1$ | 43 $B_1$ | 3 Mineralöl [2] | 12,7 | 14 | 95 |

[1] Spritztemperatur der Normkleinstäbe 250°C, Prüftemperatur 23°C

[2] Als Mineralöl wurde (R)Tufflo 6056 der Firma Sinclair eingesetzt.

## Patentansprüche

1. Verfahren zur Herstellung einer thermoplastischen Formmasse

bestehend aus

A  40 bis 90 Gew.%, bezogen auf A+B+C, mindestens eines Copolymerisates, aufgebaut aus

$a_1$)  65 bis 95 Gew.%, bezogen auf A, mindestens eines monovinylaromatischen Monomeren, das bis zu 12 Kohlenstoffatome enthält, und

$a_2$)  5 bis 35 Gew.%, bezogen auf A, mindestens eines acrylisch ungesättigten Monomeren,

B  9,9 bis 60 Gew.%, bezogen auf A+B+C, mindestens eines Pfropfmischpolymerisates

aufgebaut aus

$b_1$)  50 bis 90 Gew.%, bezogen auf B, mindestens einer elastomeren Pfropfgrundlage, die eine Glastemperatur $< 0^{\circ}C$ aufweist,

$b_2$)  10 bis 50 Gew.%, bezogen auf B, mindestens eines monovinylaromatischen Monomeren mit bis zu 12 Kohlenstoffatomen

$b_3$)  gegebenenfalls enthaltend bis zu 25 Gew.%, bezogen auf B, mindestens eines acrylisch ungesättigten Monomeren, und

C  0,1 bis 16 Gew.%, bezogen auf A+B+C, mindestens eines mit Komponente B partiell verträglichen Schmiermittels

gegebenenfalls enthaltend

D  übliche Zusatzstoffe,

durch Mischen der Komponenten der Formmasse in üblichen Mischvorrichtungen, dadurch gekennzeichnet, daß man zunächst die Komponente B und C der Formmasse intensiv miteinander vermischt und die dabei erhaltene homogene Mischung anschließend in eine Schmelze von A einarbeitet.

2. Verfahren gemäß Anspruch 1, dadurch gekennzeichnet, daß eine noch feuchte Komponente B angewendet wird.

3. Verwendung der Formmasse gemäß Anspruch 1 zur Herstellung von Formteilen.

4. Formteile aus Formmassen gemäß Anspruch 1.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | DE - A1 - 2 846 754 (BASF AG)<br><br>* Ansprüche; Seite 16, Zeilen 1-29 *<br><br>-- | 1-4 | C 08 L 25/08<br><br>C 08 L 55/02 |
| A | DE - A1 - 3 100 382 (MITSUBISHI RAYON CO., LTD.)<br><br>* Ansprüche; Seite 19, Zeilen 20-32 *<br><br>-- | 1,3,4 | |
| A | DE - A1 - 2 946 761 (BASF AG)<br><br>* Anspruch *<br><br>-- | 1 | |
| A | DE - A1 - 2 901 576 (BASF AG)<br><br>* Ansprüche; Seite 17, Zeile 2 - Seite 18, Zeile 19 *<br><br>---- | 1,3,4 | |

RECHERCHIERTE SACHGEBIETE (Int. Cl. 3)

C 08 L

Der vorliegende Recherchenbericht wurde für alle Patentansprüche erstellt.

| Recherchenort | Abschlußdatum der Recherche | Prüfer |
|---|---|---|
| WIEN | 27-05-1983 | TENGLER |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82